# EUROPÄISCHE PATENTSCHRIFT

(11) **EP 2 609 411 B1**
(45) Veröffentlichungstag und Bekanntmachung des Hinweises auf die Patenterteilung: **11.07.2018**
(21) Anmeldenummer: 11757793.2
(22) Anmeldetag: 16.08.2011
(51) Int. Cl.: G01M 15/11, F02D 41/22, F02N 11/04, F02P 17/00, F02D 41/20, F02D 41/14

(54) **VERFAHREN ZUM DETEKTIEREN VON FEHLZÜNDUNGEN IN VERBRENNUNGSMOTOREN UND DETEKTIERUNGSVORRICHTUNG**
METHOD FOR DETECTING MISFIRES IN INTERNAL COMBUSTION ENGINES, AND DETECTION DEVICE
PROCÉDÉ DE DÉTECTION DES DÉFAUTS D'ALLUMAGE DANS DES MOTEURS À COMBUSTION INTERNE ET DISPOSITIF DE DÉTECTION

(30) Priorität: 26.08.2010 DE 102010035612
(43) Veröffentlichungstag der Anmeldung: 03.07.2013
(73) Patentinhaber: AVL Software And Functions GmbH, 93059 Regensburg (DE)
(72) Erfinder: ANGERMAIER, Anton, 84172 Buch am Erlbach (DE); DEIML, Mathias, 93093 Donaustauf (DE); PROBST, Christian, 93167 Falkenstein (DE); SCHARNAGL, Michael, 92712 Pirk (DE)
(74) Vertreter: Hannke, Christian
(86) Internationale Anmeldenummer: PCT/EP2011/064102
(87) Internationale Veröffentlichungsnummer: WO 2012/025434

(56) Entgegenhaltungen:
- EP-A1- 1 143 134
- DE-A1- 4 133 059
- DE-A1- 10 063 457
- DE-A1- 10 227 528
- US-A- 5 524 480

## Beschreibung

Die vorliegende Erfindung bezieht sich auf ein Verfahren und eine Detektierungsvorrichtung zum Detektieren von Fehlzündungen in Verbrennungsmotoren gemäß dem Oberbegriff von Anspruch 1. Fehlzündungen innerhalb eines Zylinders eines Verbrennungsmotors beispielsweise eines Personenkraftfahrzeuges oder eines Motorrades entstehen z.B., wenn das in dem Zylinder der Brennkraftmaschine eingespritzte Luft/Kraftstoffgemisch innerhalb des Zylinders nicht explodiert, so dass unverbranntes Gemisch in den nachgeschalteten Katalysator transportiert werden kann.

Dieses unverbrannte Gemisch kann dann beispielsweise über die Auslassventile in den Abgasstrang bis zu dem Katalysator oder auch bis in die Auspuffanlage gelangen, wo es sich entzünden kann, wobei sich diese Entzündung z.B. im Wesentlichen durch einen sichtbaren Funken darstellt. Diese zumeist ungewollte Zündung des Gemisches außerhalb des Verbrennungsraumes der Brennkraftmaschine bzw. des Motors kann beispielsweise zu einem starken Temperaturanstieg innerhalb des Katalysators führen, wodurch dieser frühzeitig altert oder sogar zerstört wird. Zudem beeinflussen diese Verbrennungsaussetzer die Abgaswerte negativ, was zu Verstößen gegen gesetzliche Vorschriften bezüglich zulässiger Schadstoffemissionen von Fahrzeugen führen kann. Somit ist es erforderlich diese Verbrennungsaussetzer zu entdecken und durch die Anwendung von entsprechenden Maßnahmen zukünftig zu vermeiden.

Es ist jedoch auch denkbar, dass das in den Zylinder eingespritzte Luft/Kraftstoffgemisch sich bevor der Kolben den oberen Todpunkt erreicht, entzündet, wodurch es zu einer sogenannten frühzeitigen Entzündung des Gemisches kommt. Durch diese unkontrollierte Entzündung, welche auch als Klopfen bezeichnet wird, verbrennt das Gemisch unkontrolliert mit hoher Geschwindigkeit, wodurch die Temperatur und der Druck schlagartig ansteigen und sich somit Druckwellen mit Schallgeschwindigkeit im Brennraum ausbreiten und auf dessen Wände treffen. Dadurch wird der Motor mechanisch und thermisch sehr hoch belastet, wodurch Druckspitzen auftreten können, welche die Kolben, die Lager und/oder die Zylinderköpfe nachhaltig beschädigen können.

Zur Erkennung von Fehlzündungen ist aus dem allgemeinen Stand der Technik ein an der Kurbelwelle des Motors angeordnetes 60-2 Messzahnrad bekannt, welches lediglich 58 Zähne aufweist, wobei zwei nebeneinander liegende Zähne fehlen. Diese fehlenden Zähne bilden eine Aussparung, welche als Markierung für einen Sensor dient, welcher die Drehbewegung des Zahnrades der Motorwelle mittels des Messzahnrades überwacht. Bei jeder Drehung der Kurbelwelle, welche von den Kolben eines Verbrennungsmotors angetrieben wird, dreht sich das Zahnrad innerhalb eines definierten Drehwinkels. Der Sensor ermittelt nun, ob sich das Messzahnrad nun in einer definierten Zeit um den definierten Drehwinkel gedreht hat und ob alle Zähne des Zahnrades mit gleichbleibender Winkelgeschwindigkeit den Sensor passiert haben. Vollendet das Zahnrad erst nach Ablauf eines definierten Zeitintervalls seine Drehung um den definierten Drehwinkel, so kann man davon ausgehen, dass eine Fehlzündung und in diesem Falle eine Verbrennungsaussetzung stattgefunden hat. Das definierte Zeitintervall muss kontinuierlich an die Fahrgegebenheiten, wie beispielsweise der Geschwindigkeit und der Beschleunigung sowie der Fahrzeugbelastung angepasst werden.

Da jedoch in den heutigen Fahrzeugen die Drehzahl der Kolbenwelle eines Ottomotors bzw. deren Kolbenbewegung oder die Drehzahl eines Wankelmotors sehr schnell geregelt wird, um die Motorleistung zeitnah an die entsprechende Belastungen anzupassen, ist eine eindeutige Erkennung einer Fehlzündung über ein herkömmliches 60-2 Messzahnrad nicht mehr möglich.

EP 1 143 134 A1 beschreibt eine Vorrichtung zur Ermittlung eines Ausgangszustands, wie beispielsweise einer Fehlzündung einer Verbrennungsmaschine.

DE 100 63 457 A1 zeigt ein Verfahren zur Erkennung von Verbrennungsaussetzern einer Brennkraftmaschine.

US 5 524 480 A offenbart ein Verfahren zum Ermitteln von Laufunruhen einer Brennkraftmaschine.

DE 41 33 059 A1 gibt eine Steuerung an, welche den momentanen Verlauf des Stroms der Generatoranordnung in Abhängigkeit der von der Kurbelwellen-Winkelposition der Brennkraftmaschine erfasst.

DE 102 27 528 A1 beschreibt ein Antriebssystem mit einer Brennkraftmaschine und einer elektrischen Maschine, wobei der elektrischen Maschine ein Lageermittler zugeordnet ist, mit welchem Zündaussetzer der Brennkraftmaschine detektiert werden können.

Demzufolge ist es erforderlich eine Vorrichtung bereitzustellen, welche eine Fehlzündung trotz sehr schneller Regelungen und Steuerungen des Motors zuverlässig erkennt und ggf. regeln kann.

Demnach ist es die Aufgabe der vorliegenden Erfindung ein Verfahren und eine Detektierungsvorrichtung zum Detektieren von Fehlzündungen in Verbrennungsmotoren zur Verfügung zu stellen, welche trotz stetiger Regelung und Steuerung des Verbrennungsmotors und unabhängig von einwirkenden Umgebungsfaktoren eine Fehlzündung im Verbrennungsmotor zuverlässig erkennen kann und kostengünstig ist.

Diese Aufgabe löst die vorliegende Erfindung mittels einem Verfahren sowie einer Detektierungsvorrichtung zum Erkennen von Fehlzündungen in einem Verbrennungsmotor gemäß den Ansprüchen.

Ein Verfahren zum Detektieren von Fehlzündungen in einem Verbrennungsmotor, welcher drehsteif über eine Rotorwelle mit einem Generator verbunden ist, weist eine Detektierungsvorrichtung des Generators zum Detektieren der Fehlzündungen auf, welche Abweichungen aufgrund von Fehlzündungen des Verbrennungsmotors durch einen Vergleich von erhaltenden Istwerten der erzeugten Stromstärke mit Sollwerten für die Stromstärke, welche von einem Drehzahlregler vorgegeben werden, ermittelt.

Dabei kann der Generator einerseits als stromerzeugende Elektromaschine, beispielsweise während des Betriebes des Verbrennungsmotors und andererseits als stromverbrauchende Elektromaschine bzw. als Elektromotor, beispielsweise während des Stillstandes des Verbrennungsmotors verwendet werden.

Demnach wird die Fehlzündung innerhalb des Brennraumes eines Verbrennungsmotors, welcher beispielsweise ein Otto- oder Wankelmotor sein kann, nicht wie bisher durch ein Steuergerät des Verbrennungsmotors überwacht bzw. ermittelt, sondern durch ein Steuergerät bzw. eine Detektierungsvorrichtung eines Elektromotors bzw. eines Generators bzw. einer Elektromaschine.

Der Rotor des Elektromotors ist folglich beispielsweise auf der Antriebswelle bzw. Kurbelwelle des Ottomotors oder auf der Exzenterwelle des Wankelmotors oder auf einer Rotorwelle, welche mit der Kurbel- oder Exzenterwelle verbunden ist, drehsteif angeordnet und wird durch die Bewegung des Motors angetrieben.

Demnach arbeitet der dem Verbrennungsmotor nachgeschaltete Elektromotor als Generator dessen Rotor durch die Motorarbeit angetrieben wird und einen elektrischen Strom mit einer definierten Stromstärke erzeugt.

D.h., findet in den Zylindern des Motors eine Verbrennung statt, wird beispielsweise die Kurbelwelle durch die translatorische Bewegung der Kolben in Rotation bzw. die Exzenterwelle des Wankelmotors in Rotation versetzt. Da der Motor über die Rotorwelle des Generators mit dem Generator verbunden ist, ist demnach entweder die Kurbelwelle bzw. Antriebswelle oder die Exzenterwelle mit der Rotorwelle verbunden bzw. entspricht der Rotorwelle, welche ebenfalls in Rotation versetzt wird.

Durch die Bewegung der Rotorwelle wird der Rotor des Generators betrieben, welcher aufgrund der in Umfangsrichtung um den Rotor angeordneten Magnete bzw. Induktionsspulen ein Magnetfeld und damit elektrischen Strom erzeugt, welcher bevorzugt ein dreiphasiger Wechselstrom ist.

Die Detektierungsvorrichtung, welche beispielsweise ein Bestandteil der Steuerungseinrichtung des Elektromotor oder bevorzugt die Steuerungseinrichtung des Elektromotors ist, überwacht die Drehbewegung der Rotorwelle genauso wie die erzeugten elektrischen Ströme bzw. die erzeugte Stromstärke.

Alle von der Detektierungsvorrichtung überwachten Größen werden als Istwerte angenommen und mit Sollwerten, welche von einem Drehzahlregler ermittelt bzw. vorgegeben werden, verglichen.

Der Drehzahlregler ist ein dem Elektromotor bzw. dem Generator vorgeschaltetes Element und soll beispielsweise bei einer wechselnden Last eine konstante Drehzahl des Elektromotors sicherstellen.

Zur Detektierung von Fehlzündungen in einem Verbrennungsmotor werden im Folgenden drei Möglichkeiten vorgestellt und näher erläutert:
Eine erste Vorgehensweise zur Detektierung von Fehlzündungen in einem Verbrennungsmotor ist, dass die Detektierungsvorrichtung die von dem Generator erzeugte Stromstärke misst und mit den Sollwerten der Stromstärke, welche von dem Drehzahlregler vorgegeben werden, vergleicht.

Eine nicht beanspruchte zweite Vorgehensweise zur Detektierung von Fehlzündungen in einem Verbrennungsmotor ist beispielsweise, dass eine Winkelbeschleunigung der Rotorwelle des Generators aus mittels eines Positionssensors ermittelten Winkelwerten der Rotorwelle, welche den Winkel, um den sich die Rotorwelle innerhalb eines definierten Zeitraumes im ihre Achse dreht, darstellen, von der Detektierungsvorrichtung abgeleitet und mit Sollwerten des Drehzahlreglers verglichen wird.

Eine nicht beanspruchte dritte Vorgehensweise zur Detektierung von Fehlzündungen in einem Verbrennungsmotor ist beispielsweise, dass der Verlauf der Winkelwerte der Rotorwelle des Generators innerhalb definierter Zeitgrenzen mittels der Bestimmung von definierten geschwindigkeitsabhängigen Grenzen von der Detektierungsvorrichtung analysiert wird.

Bei der ersten Variante wird bevorzugt durch den Generator ein dreiphasiger Wechselstrom erzeugt, dessen resultierende Amplitude als Istwert von der Detektierungsvorrichtung innerhalb eines definierten Zeitfensters ermittelt und gemessen wird.

Dazu wird der erzeugte Wechselstrom bzw. die resultierende Amplitude vorzugsweise innerhalb eines definierten Zeitfensters betrachtet, welche die Dauer einer Zündungsperiode bzw. die Zündungsfrequenz umfasst. Da im Schnitt beispielsweise aller 12ms eine Zündung erfolgt, wird demnach die resultierende Amplitude z.B. in einem Zeitfenster mit der Dauer von 12ms analysiert. Da jedoch je nach Belastung des Fahrzeuges die Frequenz der Zündung deutlich geringer ausfallen kann, beispielsweise aller 10ms, wird das Zeitfenster, in welchem die resultierende Amplitude betrachtet wird entsprechend der Zündungsfrequenz kontinuierlich angepasst.

Folglich können die Zeitfenster, in welchen die resultierende Amplitude des erzeugten dreiphasigen Wechselstroms analysiert wird vorzugsweise jeweils eine unterschiedliche Zeitdauer aufweisen.

Nachdem die Detektierungsvorrichtung die resultierende Amplitude des dreiphasigen Wechselstromes ausgelesen hat, ermittelt ebenfalls vorzugsweise die Detektierungsvorrichtung eine Differenz aus dem Istwert und dem Sollwert, welcher vorzugsweise von dem Drehzahlregler vorgegeben wird.

D.h., dass der Drehzahlregler beispielsweise einen Sollwert für die Stromstärke bzw. die resultierende Amplitude des dreiphasigen Wechselstromes entsprechend der aktuell vorherrschenden Belastung des Fahrzeuges bzw. des Verbrennungsmotors vorgibt.

Mittels einer einfachen Rechenoperation, wie bevorzugt einer Subtraktion, wird dem Sollwert der Istwert bzw. dem Istwert der Sollwert abgezogen. Die entstandene Differenz ist ein Delta der vorliegenden Stromstärke bzw. der vorliegenden resultierenden Amplitude der Stromstärke, welche je nach Fahrzeugbelastung in definierten Grenzen betrachtet wird.

Diese Differenz entspricht einer Regelabweichung, welcher die Detektierungsvorrichtung bestimmte motor- und drehzahlabhängige Grenzen zuordnet, innerhalb derer eine Fehlzündung auftritt.

D.h., da die Zündung im Verbrennungsraum des Verbrennungsmotors vorzugsweise als eine Art Störgröße empfunden werden kann, welche sich auf die Rotordrehung sowie auf die erzeugten Ströme bzw. Stromstärken und folglich auf die resultierende Amplitude auswirkt, erzeugt diese Zündung folglich auch eine Regelabweichung, d.h. eine zumindest kurzzeitigen Abweichung des gemessenen Ist-Wertes vom Soll-Wert. Demnach ist eine Regelabweichung im Wesentlichen ein Indiz für eine Zündung.

Die Regelabweichung ist folglich die Abweichung des Istwertes von dem Sollwert und wird von der Detektierungsvorrichtung innerhalb definierter drehzahlabhängiger und/oder motorabhängiger Grenzen betrachtet, welche je nach Motor- bzw. Fahrzeugbelastung unterschiedliche Werte annehmen können.

Liegt die Regelabweichung außerhalb dieser definierten Grenzen, so ist vorzugsweise davon auszugehen, dass keine Fehlzündung im Verbrennungsmotor stattgefunden hat.

Liegt andererseits keine Regelabweichung vor, d.h. entspricht der gemessene Istwert dem vorgegebenen Sollwert bzw. ist beispielsweise die Regelabweichung so gering, dass diese innerhalb definierter Grenzen angeordnet werden kann, so ist eine Fehlzündung im Brennraum des Verbrennungsmotors aufgetreten. D.h., dass in diesem Fall keine Zündung im Verbrennungsraum des Verbrennungsmotors stattgefunden hat, welche eine Regelabweichung verursachen würde.

Tritt dennoch eine Regelabweichung auf, welche jedoch beispielsweise noch innerhalb der definierten Grenzen liegt, so kann davon ausgegangen werden, dass es sich hierbei z.B. um zündungsunabhängige Störgrößen handelt.

Zusätzlich zu der Analyse der Regelabweichung wird eine Betrachtung des Gradienten der resultierenden Amplitude des dreiphasigen Wechselstromes durchgeführt.

D.h., dass der Istwert einen Gradienten aufweist, welcher mit einem Gradienten-Sollwert, welcher von dem Drehzahlregler vorgegeben wird, mittels der Detektierungsvorrichtung verglichen wird.

Der Gradient der resultierenden Amplitude entspricht der Steigung der resultierenden Amplitude innerhalb eines definierten Wertebereiches, wobei der Gradient einen Rückschluss auf eine definierte Stromerzeugung des Generators ermöglicht. D.h., dass innerhalb eines bestimmten Wertebereiches der Generator über den gesamten Zeitraum eine vorgegebene Stromstärke erzeugen muss, welche sich durch eine Kurve einer resultierenden Amplitude ausdrückt.

Wird beispielsweise innerhalb des Verbrennungsraumes des Verbrennungsmotors eine Zündung des Luft-/Gasgemisches ausgelöst, so kommt es zu einer kurzzeitigen Steigerung des erzeugten Stromes bzw. der erzeugten Stromstärke in dem Generator innerhalb des definierten Zeitfensters. Dadurch entsteht vorzugsweise eine Abweichung des Soll-Stromwertes vom Ist-Stromwert, wodurch auch die aufgezeichnete Kurve der resultierenden Amplitude vorzugsweise einen abweichenden Gradienten zum Soll-Wert-Gradienten aufzeigt. Liegt demnach der Gradient der gemessenen resultierenden Amplitude außerhalb definierter Grenzen liegt vorzugsweise keine Fehlzündung vor bzw. hat eine Zündung im Verbrennungsraum des Verbrennungsmotors stattgefunden.

Somit kann beispielsweise eine Fehlzündung bzw. eine Zündung im Verbrennungsmotor aufgrund der Abweichung des Gradienten-Istwertes vom Gradienten-Sollwert detektiert werden.

Gemäß der nicht beanspruchten zweiten Variante zum Detektieren von Fehlzündungen in Verbrennungsmotoren werden vorzugsweise mittels des Positionssensors die Winkelpositionen der Rotorwelle des Generators innerhalb definierter Zeitgrenzen erfasst und der Detektierungsvorrichtung die Winkelpositionen als Winkelwerte übermittelt.

D.h., dass der Positionssensor beispielsweise derart an der Rotorwelle des Generators angeordnet ist, dass er innerhalb eines vorgegebenen Zeitraumes eine Bewegung der Rotorwelle um ihre Achse erfassen kann. Somit wird der Winkel gemessen, den die Rotorwelle nach einer definierten Zeitdauer um ihre Achse rotiert ist. Dieser Winkelwert bzw. die einzelnen Winkelwerte werden von dem Positionssensor an die Detektierungsvorrichtung übermittelt.

Danach leitet die Detektierungsvorrichtung aus den Winkelwerten die Winkelgeschwindigkeit und aus der Winkelgeschwindigkeit die Winkelbeschleunigung ab.

Das Ableiten bis zur Winkelbeschleunigung ist vorzugsweise_erforderlich, um die gemessenen Winkelgeschwindigkeitsdaten im Wesentlichen zu entzerren bzw. zu glätten, um Abweichungen innerhalb der Datenmenge kenntlich machen zu können. Damit kann ein charakteristischer Anstieg von einer negativen Beschleunigung, beispielsweise beim Abbremsen der Rotorwelle durch eine Fehlzündung, in eine positive Beschleunigung, beispielsweise bei einer Zündung, dargestellt werden.

Nachdem die Winkelbeschleunigung aus der Winkelgeschwindigkeit abgeleitet wurde, werden die Werte der Winkelbeschleunigung bevorzugt mittels eines Frequenzdiskriminators gefiltert.

Der Frequenzdiskriminator ist dafür verantwortlich die zu den Sollwerten abweichenden Istwerte aus der Vielzahl der Werte herauszufiltern, damit die Detektierungsvorrichtung bewerten kann, ob eine Fehlzündung des Verbrennungsmotors vorliegt oder nicht.

D.h., wenn eine Fehlzündung im Verbrennungsmotor innerhalb eines definierten Zeitraumes stattgefunden hat, wodurch dementsprechend die in dem Zeitraum vorliegende Zündung ausgefallen ist, bleibt die Winkelbeschleunigung der Rotorwelle zum Zeitpunkt der Zündung nahezu konstant oder nimmt sogar leicht ab, anstatt zum Zündzeitpunkt zumindest kurzeitig zuzunehmen. Dieses Ausbleiben einer Erhöhung der Winkelbeschleunigung bzw. der Drehzahl entspricht einer Fehlzündung des Verbrennungsmotors und wird mittels des Frequenzdiskriminators erkannt.

Entsprechend der nicht beanspruchten dritten Variante zum Detektieren von Fehlzündungen in einem Verbrennungsmotor wird durch einen Positionssensor die Winkelposition der Rotorwelle des Generators erfasst und die Winkelwerte der Detektierungsvorrichtung übermittelt. Diese Winkelwerte werden in definierten Zeitgrenzen von dem Positionssensor ausgelesen. Die Detektierungsvorrichtung bewertet den Trend der Winkelwerte, den sogenannten Verlauf der Winkelpositionen der Rotorwelle in definierten geschwindigkeits- und/oder motorabhängigen Grenzen, d.h. je nach Motor- bzw. Fahrzeugbelastung werden die zur Beurteilung der Winkelposition der Rotorwelle herangezogenen Grenzen neu definiert.

Liegen alle Winkelwerte im Wesentlichen innerhalb der definierten Grenzen fand eine Fehlzündung in dem Verbrennungsmotor statt.

Zudem wird eine Detektierungsvorrichtung zum Detektieren von Fehlzündungen in einem Verbrennungsmotor mittels Verwendung eines erfindungsgemäßen Verfahrens, welcher über eine Rotorwelle mit einem Generator bzw. einem Elektromotor bzw. einer Elektromaschine drehfest verbunden ist, beansprucht, wobei die Detektierungsvorrichtung in oder an dem Generator angeordnet ist.

Demnach ist die Detektierungsvorrichtung beispielsweise lediglich ein Bestandteil des Steuergerätes des Generators bzw. bevorzugt das Steuergerät des Generators. Ein zusätzliches Steuergerät an dem Verbrennungsmotor selbst wird dabei nicht mehr zwingend benötigt, da die Überwachung sowie die Steuerung und Regelung des Verbrennungsmotors von dem Steuergerät des Generators durchgeführt werden kann.

Dabei kann der Generator selbst auch ein Elektromotor sein bzw. als ein Elektromotor arbeiten, wenn beispielsweise aufgrund der Start-Stop-Automatik an einer Ampel die Kolben des Verbrennungsmotors in eine definierte Startposition bewegt werden müssen, um ein schnelles Starten und Anfahren des Fahrzeuges zu ermöglichen.

Dazu kann der Elektromotor über eine Drehbewegung der Rotorwelle, welche beispielsweise an der Kolbenwelle drehsteif angeordnet ist oder ein Bestandteil der Kolben- oder Antriebswelle ist, die Kolben in den Zylindern in eine definierte und optimale Ausgangsposition bewegen, bevor der Motor gestartet und das Luft/Kraftstoffgemisch in die Zylinder gepresst wird.

Es ist auch möglich, dass der beschriebene Verbrennungsmotor kein Ottomotor bzw. Dieselmotor, sondern eine Wankelmotor ist, dessen Exzenterwelle beispielsweise drehsteif mit der Rotorwelle verbunden ist oder die Rotorwelle ein Abschnitt der Exzenterwelle darstellt.

Weitere Vorteile, Ziele und Eigenschaften der vorliegenden Erfindung werden anhand nachfolgender Beschreibung anliegender Zeichnung erläutert, in welcher beispielhaft Prinzipskizzen von Flussdiagrammen sowie von Diagrammen der ersten, zweiten und dritten Variante zur Detektierung einer Fehlzündung in einem Verbrennungsmotor dargestellt sind.

Komponenten, welche in den Figuren wenigstens im Wesentlichen hinsichtlich ihrer Funktion übereinstimmen, können hierbei mit gleichen Bezugszeichen gekennzeichnet sein, wobei diese Komponenten nicht in allen Figuren gekennzeichnet und erläutert sein müssen.

In den Figuren zeigen:
- Fig. 1: eine Prinzipskizze eines Flussdiagramms zur Detektierung einer Fehlzündung in einem Verbrennungsmotor gemäß dem Stand der Technik mit einer daran angeordneter Detektierungsvorrichtung zur Analyse der Stromstärke,
- Fig. 2: eine Prinzipskizze eines Ablaufdiagramms zur Detektierung einer Fehlzündung in einem Verbrennungsmotor gemäß der ersten Variante,
- Fig. 3: einen Prinzipskizze eines Diagramms zur Abbildung des Verlaufes der Stromstärke über die Zeit,
- Fig. 4: eine Prinzipskizze eines Flussdiagramms zur Detektierung einer Fehlzündung in einem Verbrennungsmotor gemäß dem Stand der Technik mit daran angeordneter Detektierungsvorrichtung zur der Analyse der Winkelgeschwindigkeit bzw. des Winkelwertes,
- Fig. 5: eine Prinzipskizze eines Ablaufdiagramms zur Detektierung einer Fehlzündung in einem Verbrennungsmotor gemäß der nicht beanspruchten zweiten Variante,
- Fig. 6: eine Prinzipskizze eines Diagramms zur Detektierung einer Fehlzündung in einem Verbrennungsmotor gemäß der nicht beanspruchten dritten Variante,
- Fig. 7: eine Prinzipskizze eines Diagramms zur Abbildung der Winkelbeschleunigung über die Zeit, und
- Fig. 8: eine Prinzipskizze eines Diagramms zur Abbildung der Winkelposition des Rotors über die Zeit.

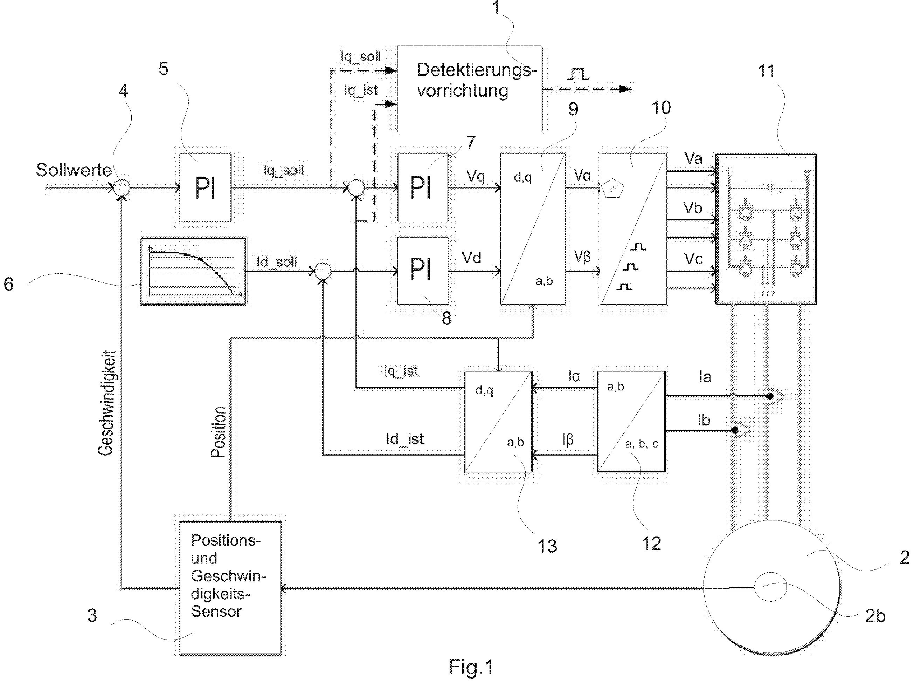

Fig. 1 zeigt eine Prinzipskizze eines Flussdiagramms zur Detektierung einer Fehlzündung in einem Verbrennungsmotor gemäß dem Stand der Technik mit einer daran angeordneten Detektierungsvorrichtung 1 zur Analyse der Stromstärke. Die Rotation der Kurbel- oder Antriebswelle bzw. der Exzenterwelle, welche an einer Rotorwelle 2a des Elektromotors 2 bzw. des Generators 2 angeordnet ist, wird über einen Positions- und Geschwindigkeitssensor 3 überwacht, welcher die ausgelesenen Werte beispielsweise mit den Werten über die aktuelle Geschwindigkeit des Fahrzeuges und damit der aktuellen Motorbelastung sowie die erforderlichen Referenz- bzw. Sollwerte bündelt 4 und an einen Proportional-Integral-Regler (PID) 5 übermittelt, welcher die geforderte Stromstärke Iq_soll ermittelt bzw. vorgibt. Iq_soll ist hierbei ein Sollwert des Momentenstroms Iq bzw. des momentbildenden Stroms Iq, welcher im Generator gebildet werden soll. Der Id_soll-Strom 6 dagegen ist der Sollwert des Blindstroms Id bzw. des Feldbildenden Stromes Id und weist gemäß der vorliegenden Erfindung bevorzugt den Wert Null auf.

Die im Stand der Technik verwendete FOC-Steuerung bzw. der FOC-Algorithmus (Feldorientierte Steuerung bzw. Regelung), welcher zur Steuerung eines dreiphasigen Statorstroms verwendet wird, um eine erweiterte Drehzahl und Positioniergenauigkeit des Elektromotors 2 zu erzielen, erzeugt einen dreiphasigen Spannungsvektor.

Da die FOC-Steuerung bzw. der FOC-Algorithmus ein aus dem allgemeinen Stand der Technik bekanntes Vorgehen ist, soll hierbei nur kurz auf die einzelnen Schritte des FOC-Algorithmus eingegangen werden:
Mittels der Clark-Transformation 12 wird das zweidimensionale, dreiachsige, auf den Stator des Elektromotors 2 bezogene Koordinatensystem auf ein zweiachsiges System umgewandelt, welches auf der gleichen Referenz beruht und welches durch eine Park-Transformation 13 in ein anderes zweiachsiges System transformiert wird, welche die Ströme bzw. Stromstärken Iq_ist und Id_ist als Ergebnis haben. Id_ist und Iq_ist sind die aktuellen an dem Elektromotor 2 vorliegenden und gemessenen Stromstärken.

Die vom Elektromotor 2 bzw. Generator 2 erzeugten bzw. anhand der Park-Transformation 13 erzeugten Ströme bzw. Stromstärken Iq_ist und Id_ist werden gemeinsam mit den Sollwerten Iq_soll und Id_soll jeweils einem zweiten PID 7 und einem dritten PID 8 übermittelt.

Der Sollwert Iq_soll steuert beispielsweise das Ausgabe-Drehmoment des Motors 2, während die Ausgänge der PIDs 7 und 8 mit Vq und Vd den Spannungsvektor liefern, welcher an den Motor 2 geschickt wird.

Anhand der über die inverse Park-Transformation 9 erzeugten Spannungen Vα und Vβ wird ein neuer Transformationswinkel abgeschätzt, welcher zur Platzierung des nächsten Spannungsvektors verwendet wird. Mittels der inversen Clark-Transformation werden die Werte Vα und Vβ in Dreiphasenwerte Va, Vb, Vc gemäß der Drei-Phasen-Brücke 11 zurücktransformiert.

Bei der aus dem Stand der Technik bekannten FOC-Methode werden die einzelnen Dreiphasen-Pulsweitenmodulationssignale per Space-Vector-Modulation (SVM) sinusförmig moduliert und an die Dreiphasenwicklungen des Motors 2 angelegt.

Gemäß der vorliegenden Erfindung ist die Detektierungsvorrichtung 1 zwischen dem ersten PID 5 und dem zweiten PID 7 zwischengeschaltet und nimmt den ermittelten bzw. transformierten Wert des Iq_ist Stromes sowie den aus dem ersten PID 5 ausgegebenen Sollwert des Stromes bzw. der Stromstärke Iq_Soll auf.

Der Strom bzw. die Stromstärke Id_ist und Id_soll werden bei der Analyse der Detektierungsvorrichtung_vorzugsweise nicht verwendet, da der Blindstrom bevorzugt Null sein soll, da alle drei Widerstände des Generators bevorzugt die gleiche Widerstandsgröße aufweisen.

Anhand der beiden Stromstärken Iq_ist und Iq_soll wird die Regelabweichung berechnet, welche je nach Positionierung bezüglich definierter Grenzen auf eine Fehlzündung hinweist oder nicht.

Das Ergebnis "Fehlzündung ja" oder "Fehlzündung nein", welches von der Detektierungsvorrichtung 1 ausgegeben wird, wird in eine entsprechenden Regel- und Steuereinrichtung des Elektromotors (hier nicht gezeigt) oder eventuell auch des Verbrennungsmotors (hier nicht gezeigt) übermittelt, um eine entsprechende Steuerung des Motors einzuleiten bzw. ein entsprechende Warnsignal über die Steuerung an den Fahrzeugführer zu übermittelt, welcher dadurch aufgefordert wird eine Werkstatt zur Behebung des Problems aufzusuchen.

Die Aufzeichnungen über eine entdeckte Fehlzündung werden beispielsweise von der Detektierungsvorrichtung selbst oder von einer entsprechenden Speichereinrichtung aufgezeichnet und vorzugsweise langfristig gespeichert, damit bei einer späteren Fehleranalyse des Fahrzeuges bzw. des Verbrennungsmotors oder der Steuersysteme erkannt werden kann, dass beispielsweise Fehlzündungen vorlagen und unter welchen Bedingungen.

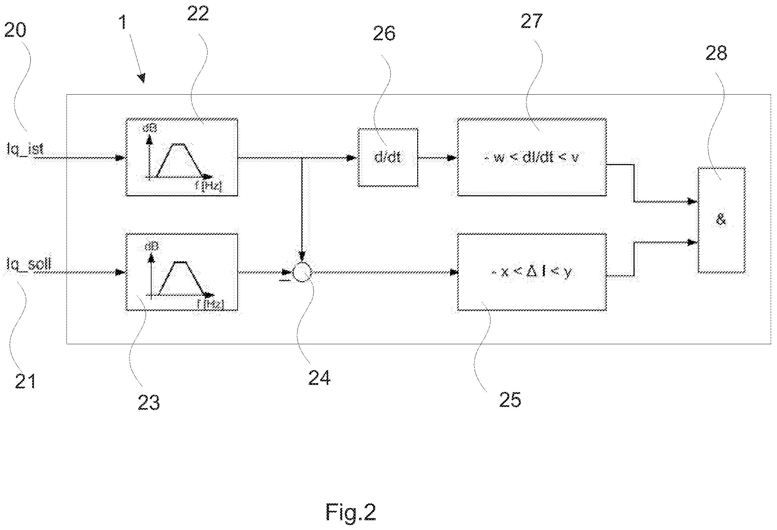

Die Fig. 2 zeigt eine Prinzipskizze eines Ablaufdiagramms zur Detektierung einer Fehlzündung in einem Verbrennungsmotor gemäß der ersten Variante zur Detektierung einer Fehlzündung in einem Verbrennungsmotor.

Der in dem Generator erzeugte Strom Iq_ist 20 bzw. die Stromstärke Iq_ist 20 wird der Detektierungsvorrichtung 1 übermittelt, welche eine resultierende Amplitude 22 aus dem dreiphasigen Wechselstrom erstellt und mit einem Iq_soll-Wert 21, welcher von dem Drehzahlregler (hier nicht gezeigt) vorgegeben und ebenfalls der Detektierungsvorrichtung 1 übermittelt wird 23, von der Detektierungsvorrichtung 1 derart verglichen wird, dass mittels einer Subtraktion der Iq_ist-Wert 20 von dem Iq_soll-Wert 21 bzw. der Iq_soll-Wert 21 von dem Iq_ist-Wert 20 subtrahiert 24 wird. Durch diese Rechenoperation 24 ergibt sich eine Differenz 25 bzw. ein Delta 25 bzw. eine Regelabweichung 25 bzw. keine Regelabweichung 25, welche innerhalb definierter Grenzen x und y, die sich beispielsweise aus motor- und/oder drehzahlabhängigen Grenzen definieren, liegt, insofern eine Fehlzündung stattgefunden hat. Demnach hat keine Zündung im Verbrennungsraum des Verbrennungsmotors eine Regelabweichung ausgelöst, welche außerhalb der definierten Grenzen liegt.

Dabei können die Grenzen x und y unterschiedliche Werte aufweisen.

Zeitgleich erfolgt eine Analyse des Gradienten 27 der resultierenden Amplitude 20, wobei die Stromstärke 20 dafür einmal über die Zeit abgeleitet 26 werden muss.

Auch die Beurteilung des Gradienten 27 erfolgt innerhalb definierter Grenzen w und v, welche unterschiedlich zu den Grenzen x und y sein können und vorzugsweise entsprechend der Motor- bzw. Fahrzeugbelastung stetig neu ausgewählt bzw. definiert werden. Liegt die Ableitung der Steigung 27 innerhalb dieser definierten Grenzen, wird davon ausgegangen, dass eine Fehlzündung vorliegt.

Da jedoch bevorzugt beide Ergebnisse 25 und 27 benötigt werden, um eine eindeutige Aussage darüber treffen zu können, ob eine Fehlzündung aufgetreten ist oder nicht, werden beide Ergebnisse mittels eines "UND"-Operators in einem Schritt 28 miteinander verglichen.

Da der UND-Operator vorzugsweise voraussetzt, dass beide Merkmale den gleichen Wert bzw. das gleiche Ergebnis, wie beispielsweise "Fehlzündung ist aufgetreten" oder "Fehlzündung ist nicht aufgetreten" aufweisen müssen, ist davon auszugehen, dass keine Fehlzündung aufgetreten ist, solange beide Ergebnisse 27 und 25 nicht den Wert "Fehlzündung ist aufgetreten" aufweisen bzw. beide Ergebnisse 27 und 25 nicht lediglich Werte aufweisen, welche innerhalb der definierten Grenzen x und y bzw. w und v liegen.

Es ist jedoch auch möglich, dass beispielsweise mittels eines "ODER-Operators" agiert wird, indem lediglich ein Analyseschritt, nämlich die Berechnung und Bewertung der Regelabweichung oder die Analyse des Gradienten, eine Fehlzündung detektieren muss, um ein Auftreten einer Fehlzündung als "wahr" zu bestätigen.

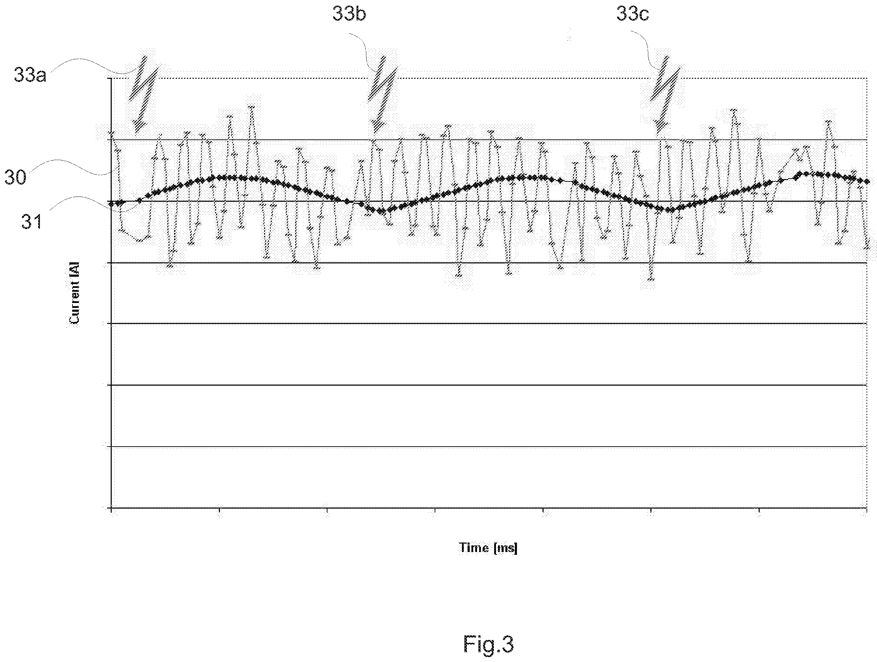

In der Fig. 3 ist eine Prinzipskizze eines Diagramms zur Abbildung des Verlaufes der Stromstärke über die Zeit dargestellt, wobei die Verlaufskurve 30 die ermittelte Stromstärke Iq_ist und die Verlaufskurve 31 die von dem Drehzahlregler (hier nicht gezeigt) vorgegebene Stromstärke Iq_soll darstellt.

Die Blitze 33a, 33b und 33c stellen einzelne Zündungen 33a, 33b und 33c bzw. einzelne Zündungszeitpunkte 33a, 33b und 33c innerhalb des Brennraumes der Verbrennungsmaschine dar.

Das Diagramm der Fig. 3 zeigt deutlich, dass der von dem Generator erzeugte Strom Iq_ist mit dem Referenzstromwert Iq_soll korreliert, jedoch ist aufgrund der Datenfülle nicht zu erkennen, ob eine Zündung 33a, 33b und 33c zum Zündzeitpunkt 33a, 33b und/oder 33c stattgefunden hat oder nicht. Dieses sogenannte Rauschen ist demnach für eine Auswertung zur Detektierung einer Fehlzündung in einem Verbrennungsmotor ungeeignet und muss entsprechend beispielsweise durch eine Ableitung über die Zeit geglättet bzw. entzerrt werden.

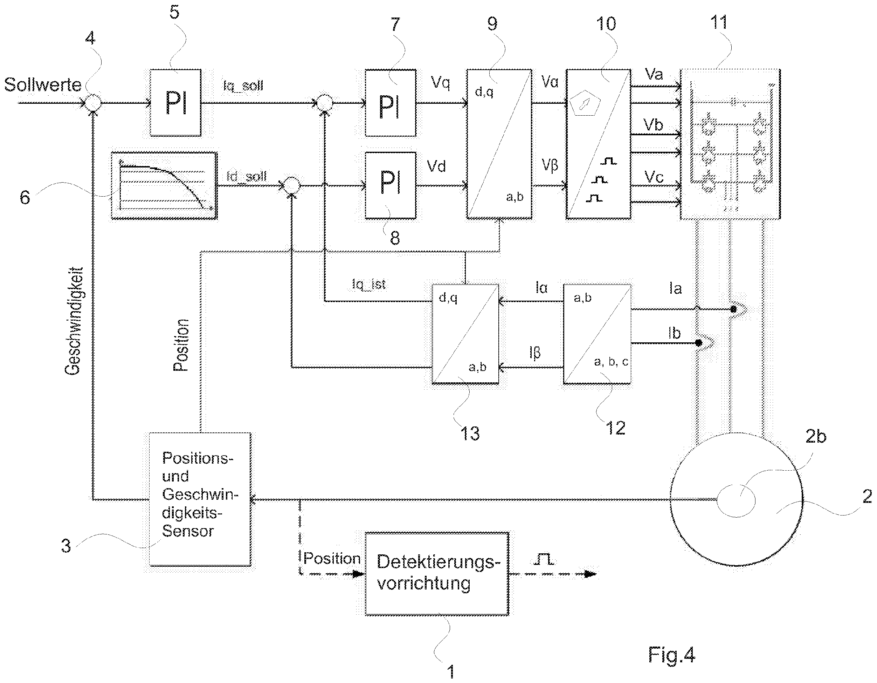

Fig. 4 zeigt eine Prinzipskizze eines Flussdiagramms zur Detektierung einer Fehlzündung in einem Verbrennungsmotor gemäß dem Stand der Technik mit daran angeordneter Detektierungsvorrichtung zur Analyse der Winkelgeschwindigkeit bzw. des Winkelwertes. Dieses Flussdiagramm entspricht dem in Fig.1 vorgestellten Flussdiagramm zur Visualisierung des Ablaufes einer FOC-Steuerung, wobei lediglich die Detektierungsvorrichtung nicht wie in Fig.1 zwischen dem ersten PID 5 und dem zweiten PID 7 angeordnet ist, um die Stromstärken Iq_ist und Iq_soll für eine Auswertung heranzuziehen, sondern beispielsweise zwischen dem Elektromotor 2 bzw. Generator 2 und dem Positions- und Geschwindigkeitssensor 2.

Als Eingangsgröße zur Beurteilung ob eine Fehlzündung aufgetreten ist oder nicht zieht die Detektierungsvorrichtung 1 die Positionswerte bzw. die Winkelpositionen der Rotorwelle 2a an, welche von dem Sensor 3 erfasst werden. Dies wird benötigt, um mittels der Winkelwerte bzw. der Winkelpositionswerte die Winkelgeschwindigkeit gemäß der zweiten Variante oder den Trend der Winkelwerte gemäß der dritten Variante zu ermitteln.

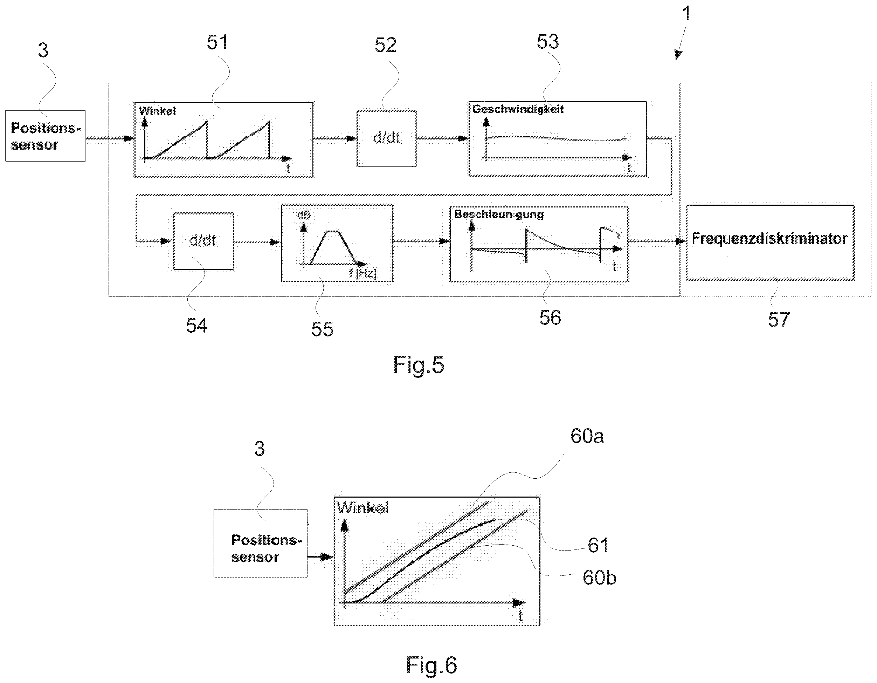

In Fig. 5 ist eine Prinzipskizze eines Ablaufdiagramms zur Detektierung einer Fehlzündung in einem Verbrennungsmotor gemäß der nicht beanspruchten zweiten Variante dargestellt.

Über einen Sensor 3 wird die Positionierung der Rotorwelle (hier nicht gezeigt) während eines definierten Zeitraumes beobachtet, wobei sich die Rotorwelle um ihre Achse dreht und dabei einen bestimmten Weg innerhalb des definierten Zeitfensters zurücklegt. Dabei kann die Welle beispielsweise einen Weg um einen definierten Drehwinkel, welcher beispielsweise zwischen 0° bis 360° liegt,_zurücklegen. Diese Rotation der Rotorwelle erzeugt die der Detektierungsvorrichtung 1 übermittelten Winkelwerte 51, welche durch die erste Rechenoperation 52 zu der Winkelgeschwindigkeit 52 abgeleitet werden. Durch eine erneute Ableitung 54 der Winkelgeschwindigkeit bzw. Drehzahl ist es möglich die magnetische Flussdichte B über die Frequenz f in einem Diagramm 55 darzustellen bzw. die Winkelbeschleunigung über die Zeit bzw. innerhalb eines definierten Zeitfensters darzustellen, um eventuelle Störgrößen, welche auf ein Auftreten einer Zündung schließen lassen, herausfiltern zu können.

Weiterhin ist es beispielsweise möglich die Werte der Winkelbeschleunigung 56 mittels eines Frequenzdiskriminators 57 filtern zu lassen, um etwaige Störgrößen bzw. Istwerte, welche von den Sollwerten abweichen, ermitteln zu können. Dieser Frequenzdiskriminator 57 ist ein aus dem Stand der Technik bekanntes elektronisches Bauteil, dessen Funktionsweise somit nicht weiter erläutert werden muss. Es ist denkbar, dass der Frequenzdiskriminator 57 ein Element der Detektierungsvorrichtung 1 darstellt oder an dieser angeordnet ist.

Fig. 6 zeigt eine Prinzipskizze eines Diagramms zur Detektierung einer Fehlzündung in einem Verbrennungsmotor gemäß der nicht beanspruchten dritten Variante. Die aus dem Positionssensor 3 erhaltenen Winkelwerte 61 werden hier über die Zeit innerhalb eines definierten Zeitfensters betrachtet. Weiterhin werden zur Analyse des Winkelwertes eine obere 60a und eine untere Grenze 60b herangezogen, welche je nach Belastung des Motors neu definiert werden können und demnach motor- bzw. drehzahlabhängig sind. Befinden sich die Winkelwerte 61 innerhalb der definierten Grenzen 60a und 60b bzw. verläuft der Trend der Winkelwerte 61 innerhalb dieser definierten Grenzen 60a und 60b, kann davon ausgegangen werden, dass eine Fehlzündung aufgetreten ist, da kein vom Soll-Wert abweichender IstWert detektiert wurde, der vorzugsweise außerhalb der definierten Grenzen liegt und bevorzugt bei einer Zündung innerhalb eines Brennraumes einer Verbrennungsmaschine auftritt.

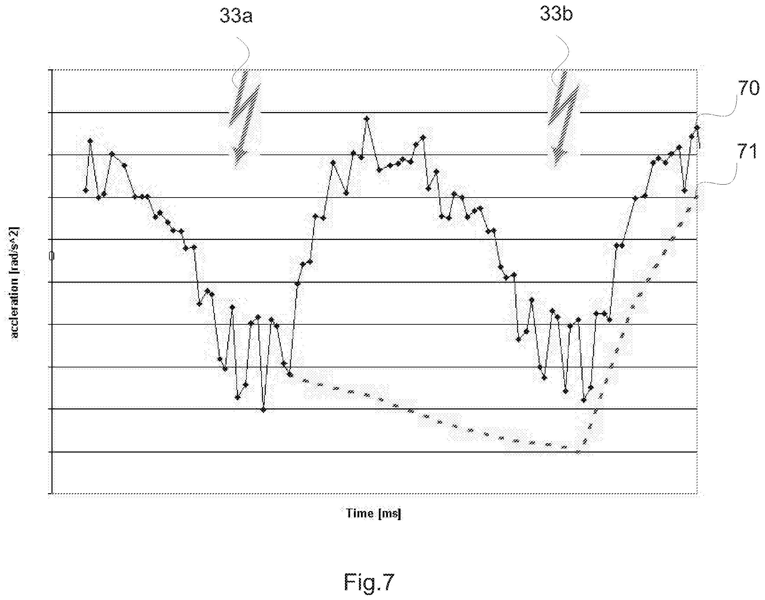

Die Fig. 7 stellt eine Prinzipskizze eines Diagramms zur Abbildung der Winkelbeschleunigung über die Zeit dar. Die abgebildeten Blitze 33a und 33b symbolisieren hier wieder eine Zündung 33a und 33b bzw. einen Zündzeitpunkt 33a und 33b.

Die Verlaufskurve 70 zeigt Istwerte der Winkelbeschleunigung der Rotorwelle des Generators über die Zeit. Man erkennt deutlich, dass die Winkelbeschleunigung direkt nach der ersten Zündung 33a zunimmt und nach einer bestimmten Zeit wieder abnimmt. D.h., dass die Rotorwelle nach einer Zündung in einem Zylinder des Verbrennungsmotors kurzzeitig positiv beschleunigt wird und dann beispielsweise aufgrund von Reibungsverlusten eine negative Beschleunigung erfährt, also leicht abgebremst wird. Erfolgt dann die zweite Zündung 33b wird die Rotorwelle wieder positiv beschleunigt usw.

Fällt beispielsweise die erste Zündung 33a aus, d.h. zum Zündzeitpunkt 33a findet keine Zündung 33a innerhalb des Brennraumes der Verbrennungsmaschine statt, wird die Beschleunigung der Rotorwelle immer geringer, was einem Bremsen der Rotorwelle entspricht. Dies wird mit der Verlaufskurve 71 dargestellt.

Die Reduzierung der Beschleunigung der Rotorwelle wird erst wieder umgekehrt, wenn die zweite Zündung 33b erfolgreich durchgeführt wurde und die Rotorwelle wieder eine positive Beschleunigung erfährt.

Der Verlauf der Verlaufskurve 71, welche eine Fehlzündung repräsentiert, kann beispielsweise durch die Detektierungsvorrichtung selbst oder durch den Frequenzdiskriminator erkannt werden.

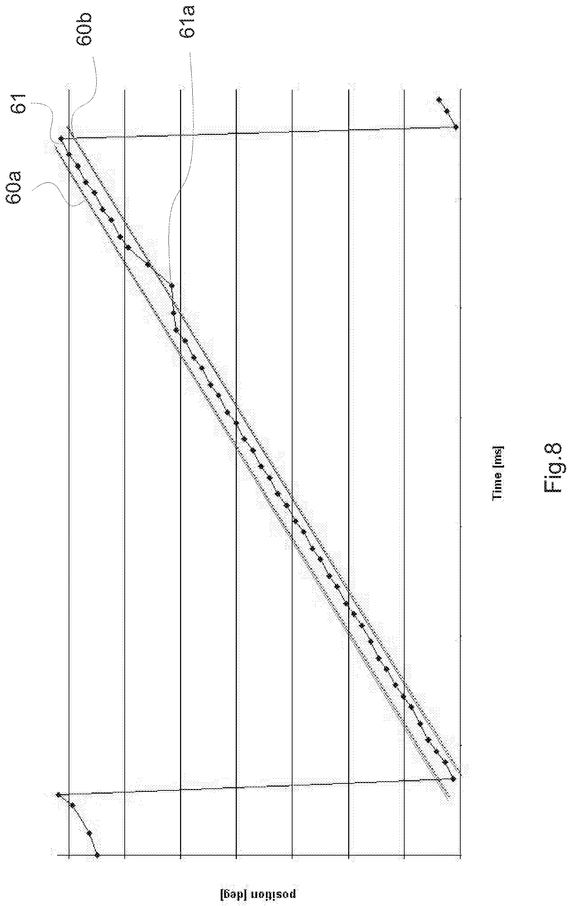

Die Fig. 8 zeigt eine Prinzipskizze eines Diagramms zur Abbildung der Winkelposition des Rotors über die Zeit zur Detektierung der Fehlzündung gemäß der nicht beanspruchten dritten Variante.

Innerhalb eines definierten Zeitfensters, welches je nach Motorbelastung definiert wird und beispielsweise eine Zeitdauer von 12ms umfasst, werden die Winkelwerte, welche von einem Sensor (hier nicht gezeigt) an die Detektierungsvorrichtung (hier nicht gezeigt) übermittelt werden, über die Zeit aufgetragen.

Dazu wird eine Vielzahl von Werten nach bestimmten Zeitintervallen beispielsweise aller 0,1ms von dem Sensor abgelesen. Jeder Wert gibt dem Sensor an, in welcher Position sich die Welle derzeit befindet. D.h., ob die Rotorwelle sich beispielsweise nach dem ersten Zeitabschnitt bereits um 1° oder um 2° oder um 3° usw. um ihre Achse, welche durch die Zündung in den Zylindern des Verbrennungsmotors betrieben wird, gedreht hat.

Der Wert 61a der Verlaufskurve 61 stellt die Position der Rotorwelle bei einer Zündung in einem Zylinder des Verbrennungsmotors dar. Dieser Wert ist der einzige Wert, welcher sich innerhalb des definierten Zeitfensters, welches lediglich nur eine Zündung berücksichtigt, außerhalb der vorgegebenen oberen 60a und unteren Grenze 60b befinden darf, da die Zündung einher geht mit einer leichten Änderung der Beschleunigung der Rotorwelle und damit mit einer Veränderung des Winkelwertes der Rotorwelle. Würde der Wert 61a ebenfalls innerhalb der definierten Grenzen, welche beispielsweise geschwindigkeitsabhängige Grenzen sind, liegen, ist dies ein Anzeichen, dass eine Fehlzündung aufgetreten ist.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Detektierungsvorrichtung
- 2: Elektromotor
- 2a: Rotorwelle
- 3: Positions- und Geschwindigkeitssensor
- 4: Bündelung
- 5: erster Proportional-Integral-Regler
- 6: Referenzwert des feldbildenden Stromes Id_soll
- 7: zweiter Proportional-Integral-Regler
- 8: dritter Proportional-Integral-Regler
- 9: inverse Park-Transformation
- 10: inverse Clark-Transformation
- 11: Drei-Phasen-Schaltung
- 12: Clark-Transformation
- 13: Park-Transformation
- 20: Eingangswert Iq_ist
- 21: Eingangswert Iq_soll
- 22: Übermittlung bzw. Auswertung des Eingangswertes Iq_ist
- 23: Übermittlung bzw. Auswertung des Eingangswertes Iq_isoll
- 24: Rechenoperation
- 25: Analyse der Regelabweichung
- 26: Ableitung des Iq_ist
- 27: Analyse des Gradienten
- 28: UND-Operator
- 30: Verlaufskurve Iq_ist
- 31: Verlaufskurve Iq_soll
- 33a: erste Zündung
- 33b: zweite Zündung
- 33c: dritte Zündung
- 51: Winkelwertes
- 52: Ableitung des Winkelwertes
- 53: Winkelgeschwindigkeit
- 54: Ableitung der Winkelgeschwindigkeit
- 55: Diagramm
- 56: Winkelbeschleunigung
- 57: Frequenzdiskriminator
- 60a: obere Grenze
- 60b: untere Grenze
- 61: Verlaufskurve des Winkelwertes
- 61a: Winkelpositionswert bei Zündung
- 70: Winkelbeschleunigungswerte bei Zündung
- 71: Winkelbeschleunigungswerte bei Fehlzündung

## Patentansprüche

1. Verfahren zum Detektieren von Fehlzündungen in einem Verbrennungsmotor, welcher drehsteif über eine Rotorwelle (2a) mit einem Generator (2) verbunden ist,
**dadurch gekennzeichnet, dass**
der Generator (2) eine Detektierungsvorrichtung (1) zum Detektieren der Fehlzündungen aufweist, welche Abweichungen aufgrund von Fehlzündungen des Verbrennungsmotors durch einen Vergleich von erhaltenden Istwerten der erzeugten Stromstärke mit Sollwerten für die Stromstärke, welche von einem Drehzahlregler vorgegeben werden, ermittelt, wobei der Vergleich unter Berücksichtigung von motorabhängigen und/oder drehzahlabhängigen ersten Grenzen (x, y) innerhalb eines definierten und von der Fahrzeugbelastung abhängiges Zeitfensters, welches die Dauer einer Zündungsperiode umfasst, stattfindet, wobei die Detektierungsvorrichtung (1) die Istwerte der von dem Generator (2) erzeugten Stromstärke misst und mit den Sollwerten der Stromstärke vergleicht und sich daraus eine Regelabweichung (25) ergibt, welche innerhalb der Grenzen (x, y) liegt, falls eine Fehlzündung stattgefunden hat, wobei zeitgleich hierzu eine zeitliche Ableitung (27) der Istwerte der Stromstärke durchgeführt wird und mit einer zeitlichen Ableitung der Sollwerte der Stromstärke verglichen wird, wobei eine Fehlzündung aufgetreten ist, wenn die Ableitung (27) innerhalb von zweiten Grenzen (v, w) liegt, wobei die zweiten Grenzen (v, w) abhängig von der Fahrzeugbelastung stetig neu definiert werden.

2. Verfahren gemäß Anspruch 1,
**dadurch gekennzeichnet, dass**
der Generator (2) einen dreiphasigen Wechselstrom erzeugt, dessen resultierende Amplitude als Istwert von der Detektierungsvorrichtung (1) innerhalb eines definierten Zeitfensters ermittelt und gemessen wird.

3. Verfahren gemäß Anspruch 1 oder 2,
**dadurch gekennzeichnet, dass**
die Detektierungsvorrichtung (1) eine Differenz aus dem Istwert und dem Sollwert, welcher von dem Drehzahlregler vorgegeben wird, ermittelt.

4. Verfahren gemäß einem der Ansprüche 1 bis 3,
**dadurch gekennzeichnet, dass**
die Differenz einer Regelabweichung entspricht, welcher die Detektierungsvorrichtung (1) bestimmte motor- und drehzahlabhängige Grenzen zuordnet, innerhalb derer eine Fehlzündung auftritt.

5. Verfahren gemäß einem der Ansprüche 1 bis 4,
**dadurch gekennzeichnet, dass**
der Istwert einen Gradienten aufweist, welcher mit einem Gradienten-Sollwert, welcher von dem Drehzahlregler vorgegeben wird, mittels der Detektierungsvorrichtung (1) verglichen wird.

6. Detektierungsvorrichtung (1) zum Detektieren von Fehlzündungen in einem Verbrennungsmotor mittels Verwendung eines Verfahrens gemäß einem der Ansprüche 1 bis 5, welcher über eine Rotorwelle (2a) mit einem Generator (2) drehfest verbunden ist,
**dadurch gekennzeichnet, dass**
die Detektierungsvorrichtung (1) in oder an dem Generator (2) angeordnet ist.

7. Vorrichtung gemäß Anspruch 6,
**dadurch gekennzeichnet, dass**
der Generator (2) ein Elektromotor (2) ist.

8. Vorrichtung gemäß Anspruch 6,
**dadurch gekennzeichnet, dass**
der Verbrennungsmotor ein Wankelmotor ist.

## Claims

1. Method for detecting misfires in an internal combustion engine which is torsionally rigidly connected to a generator (2) by means of a rotor shaft (2a),
**characterised in that**
the generator (2) comprises a detection device (1) for detecting the misfires, which device detects deviations owing to misfires of the internal combustion engine by means of comparing received actual values of the generated current intensity and target values for the current intensity, which target values are specified by a speed controller, the comparison being carried out taking into account engine-dependent and/or speed-dependent first limits (x, y) within a defined window of time that is dependent on the vehicle load and that includes the duration of an ignition period, the detection device (1) measuring the actual values of the current intensity generated by the generator (2) and comparing said actual values with the target values of the current intensity, a control deviation (25) resulting therefrom that is within the limits (x, y) if a misfire has taken place, a time derivative (27) of the actual values of the current intensity simultaneously being calculated and being compared to a time derivative of the target values of the current intensity, a misfire having taken place if the derivative (27) is within second limits (v, w), the second limits (v, w) being constantly redefined according to the vehicle load.

2. Method according to claim 1,
**characterised in that**
the generator (2) generates a three-phase alternating current, the resulting amplitude of which is detected and measured, by means of the detection device (1), as an actual value within a defined window of time.

3. Method according to claim 1 or 2,
**characterised in that**
the detection device (1) detects a difference between the actual value and the target value that is specified by the speed controller.

4. Method according to any of claims 1 to 3,
**characterised in that**
the difference corresponds to a control deviation to which the detection device (1) assigns particular engine-dependent and speed-dependent limits within which a misfire occurs.

5. Method according to any of claims 1 to 4,
**characterised in that**
the actual value has a gradient that is compared, by means of the detection device (1), with a gradient target value which is specified by the speed controller.

6. Detection device (1) for detecting misfires in an internal combustion engine using a method according to any of claims 1 to 5, which device is torsionally rigidly connected to a generator (2) by means of a rotary shaft (2a),
**characterised in that**
the detection device (1) is arranged in or on the generator (2).

7. Device according to claim 6,
**characterised in that**
the generator (2) is an electric motor (2).

8. Device according to claim 6,
**characterised in that**
the internal combustion engine is a rotary engine.

## Revendications

1. Procédé de détection des défauts d'allumage dans un moteur à combustion interne, lequel est relié de manière bloquée en rotation à un générateur (2) par l'intermédiaire d'un arbre de rotor (2a),
**caractérisé par le fait que**
le générateur (2) présente un dispositif de détection (1) pour la détection des défauts d'allumage, lequel détermine des écarts sur la base de défauts d'allumage du moteur à combustion interne par une comparaison de valeurs réelles obtenues de l'intensité de courant produite avec des valeurs de consigne pour l'intensité de courant, lesquelles sont prédéterminées par un régulateur de vitesse de rotation, la comparaison ayant lieu compte tenu de premières limites (x, y) dépendantes du moteur et/ou dépendantes de la vitesse de rotation à l'intérieur d'une fenêtre temporelle définie et dépendant de la charge du véhicule, laquelle comprend la durée d'une période d'allumage, le dispositif de détection (1) mesurant les valeurs réelles de l'intensité de courant produite par le générateur (2) et comparant avec les valeurs de consigne de l'intensité de courant et en déduisant un écart de régulation (25), lequel se situe à l'intérieur des limites (x, y) pour le cas où un défaut d'allumage s'est produit, où simultanément à cela une dérivée temporelle (27) des valeurs réelles de l'intensité de courant est réalisée et est comparée avec une dérivée temporelle des valeurs de consigne de l'intensité de courant, à l'occasion de quoi un défaut d'allumage est survenu lorsque la dérivée (27) se situe à l'intérieur de secondes limites (v, w), les secondes limites (v, w) étant nouvellement définies de façon constante en fonction de la charge du véhicule.

2. Procédé selon la revendication 1,
**caractérisé par le fait que**
le générateur (2) produit un courant alternatif triphasé, dont l'amplitude résultante est déterminée et mesurée comme valeur réelle par le dispositif de détection (1) à l'intérieur d'une fenêtre temporelle définie.

3. Procédé selon l'une des revendications 1 ou 2,
**caractérisé par le fait que**
le dispositif de détection (1) détermine une différence entre la valeur réelle et la valeur de consigne, laquelle est prédéterminée par le régulateur de vitesse de rotation.

4. Procédé selon l'une des revendications 1 à 3,
**caractérisé par le fait que**
la différence correspond à un écart de régulation, auquel le dispositif de détection (1) attribue des limites déterminées dépendantes du moteur et de la vitesse de rotation, à l'intérieur desquelles survient un défaut d'allumage.

5. Procédé selon l'une des revendications 1 à 4,
**caractérisé par le fait que**
la valeur réelle présente un gradient, lequel est comparé avec une valeur de consigne de gradient, laquelle est prédéterminée par le régulateur de vitesse de rotation, au moyen du dispositif de détection (1).

6. Dispositif de détection (1) pour la détection des défauts d'allumage dans un moteur à combustion interne par l'utilisation d'un procédé selon l'une des revendications 1 à 5, lequel est relié de manière bloquée en rotation avec un générateur (2) par l'intermédiaire d'un arbre de rotor (2a),
**caractérisé par le fait que**
le dispositif de détection (1) est disposé dans ou sur le générateur (2).

7. Dispositif selon la revendication 6,
**caractérisé par le fait que**
le générateur (2) est un moteur électrique (2).

8. Dispositif selon la revendication 6, **caractérisé par le fait que**
le moteur à combustion interne est un moteur rotatif.
